# EUROPÄISCHE PATENTANMELDUNG

(11) **EP 2 915 466 A1**
(43) Veröffentlichungstag der Anmeldung: **09.09.2015**
(21) Anmeldenummer: 14405019.2
(22) Anmeldetag: 04.03.2014
(51) Int. Cl.: A47J 31/54, A47J 31/56

(54) **Heissfluidbereiter für einen Kaffeevollautomaten**

(71) Anmelder: JURA Elektroapparate AG, 4626 Niederbuchsiten (CH)
(72) Erfinder: Reyhanloo, Shahryar, 6405 Immensee (CH); Kao, Ted, 11200 O TG Bungah, Penang (MY)
(74) Vertreter: EGLI-EUROPEAN PATENT ATTORNEYS

(57) **Zusammenfassung**

Es wird ein Heissfluidbereiter für einen Kaffeevollautomaten angegeben. Mit dem Ziel, den Aufheizzeitraum eines Fluids zu verringern, sieht die erfindungsgemässe Lösung vor, dass der Heissfluidbereiter (10) eine Temperatur-Steuerungsvorrichtung (20), eine Fluid-Heizeinrichtung (50), eine Gleichrichterschaltung (30) sowie eine Leistungs-Halbleiterschalteinrichtung (40) aufweist. Die Gleichrichterschaltung (30) ist eingangsseitig mit einer Wechselspannungsversorgung (60) und ausgangsseitig unter Zwischenschaltung der Leistungs-Halbleiterschaltereinrichtung (40) mit der Fluid-Heizeinrichtung (50) verbunden. Die Leistungs-Halbleiterschalteinrichtung (40) ist derart ansteuerbar ausgebildet, dass sie wahlweise den Ausgang der Gleichrichterschaltung (30) an die Fluid-Heizeinrichtung (50) durchschaltet. Die Temperatur-Steuerungsvorrichtung (20) ist dazu ausgelegt, die Ansteuerung der Leistungs-Halbleiterschaltereinrichtung (40) pulsweise vorzunehmen, um so eine Temperatureinstellung vorzunehmen.

## Beschreibung

Die vorliegende Erfindung betrifft einen Heissfluidbereiter für einen Kaffeevollautomaten, ein Verfahren zum Betreiben eines Kaffeevollautomaten mit einem Heissfluidbereiter sowie die Verwendung eines Heissfluidbereiters in einem Kaffeevollautomaten.

Als Kaffeevollautomaten werden Vorrichtungen zum Heissgetränkebezug bezeichnet, bei welchen auf die Initiierung einer Bedienperson hin ein Kaffeegetränk ablaufgesteuert automatisch zubereitet und ausgegeben wird. In der Regel sind derartige Kaffeevollautomaten mit einer Trinkwasserzufuhr in Form eines Wasserbehälters oder eines Trinkwasseranschlusses, einem Mahlwerk zum Zermahlen von Kaffeebohnen, einer Brüheinheit zum Bereiten des Heissgetränks aus den zermahlenen Kaffeebohnen und heissem Wasser sowie einer Heissgetränk-Ausgabe-Einrichtung in Form einer Düse oder dergleichen ausgestattet. Um die Ausgabe unterschiedlicher Arten von Kaffeegetränken zu ermöglichen, insbesondere um es dem Nutzer zu gestatten, mithilfe des Kaffeevollautomaten Milch zu erwärmen und/oder aufzuschäumen, sind herkömmliche Kaffeevollautomaten bekannt, welche zusätzlich einen vollautomatisch gesteuerten oder auch manuell gesteuerten Dampfbezug an einer Dampfausgabedüse oder dergleichen ermöglichen. Um Bauteile und damit Material zu sparen, ist es üblich, einen derartigen Kaffeevollautomaten mit nur einer primären Heizeinrichtung in Form eines Durchlauferhitzers auszustatten. Dieser eine Durchlauferhitzer dient - bei entsprechender Ansteuerung durch eine zumeist vorhandene Maschinensteuerungsschaltung - sowohl zum Bereiten von heissem Wasser für den Kaffeebrühvorgang (im Bereich um 100° C), als auch zum Bereiten von Nutzdampf zur Ausgabe an der Dampfbezugsdüse, wobei er dazu das zugeführte Trinkwasser zur Überführung in den gasförmigen Zustand auf Temperaturen um ca. 160° C aufheizen muss.

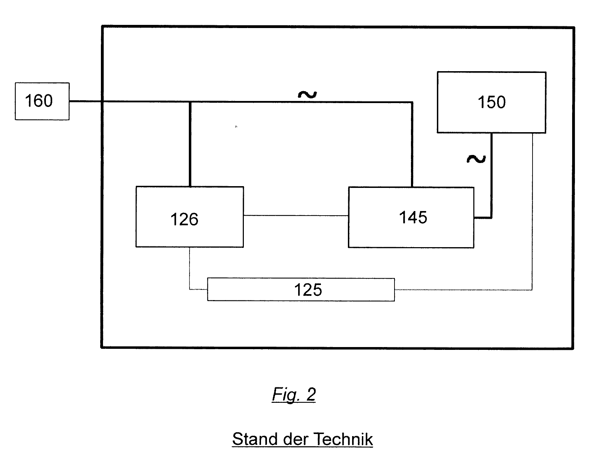

Es ist bei herkömmlichen Kaffeevollautomaten bekannt, zur bedarfsweisen Ansteuerung des Durchlauferhitzers ein ansteuerbares Schaltelement zwischen die Wechselspannungsversorgung und den Durchlauferhitzer zu schalten. Fig. 2 zeigt einen derartigen herkömmlichen Schaltungsaufbau schematisch in Form eines Blockdiagramms. Von einer externen Wechselspannungsversorgung 160 zugeführte Wechselspannung (in der Regel gewöhnliche Netz-Wechselspannung von 230 V und 50 Hz) wird an den einen Leistungsanschluss eines Triac 145 angelegt; ausgangsseitig ist der Triac mit einer Fluid-Heizeinrichtung, hier in Form eines Thermoblocks, verbunden. Zur Ansteuerung des Triac ist ein Mikrocontroller 126 vorgesehen, welcher in Abhängigkeit des Signals von einem Fluid-Temperatursensor 125, der die Temperatur des Fluids am Ausgang des Thermoblocks misst, den Triac ansteuert. Eine derartige Ansteuerung ist bei der herkömmlichen Ansteuerungselektronik nur derart möglich, dass der Triac 145 die volle Wechselspannung an den Thermoblock 150 über einen Zeitraum von mehreren Sekunden bis zu einigen Minuten durchschaltet oder nicht.

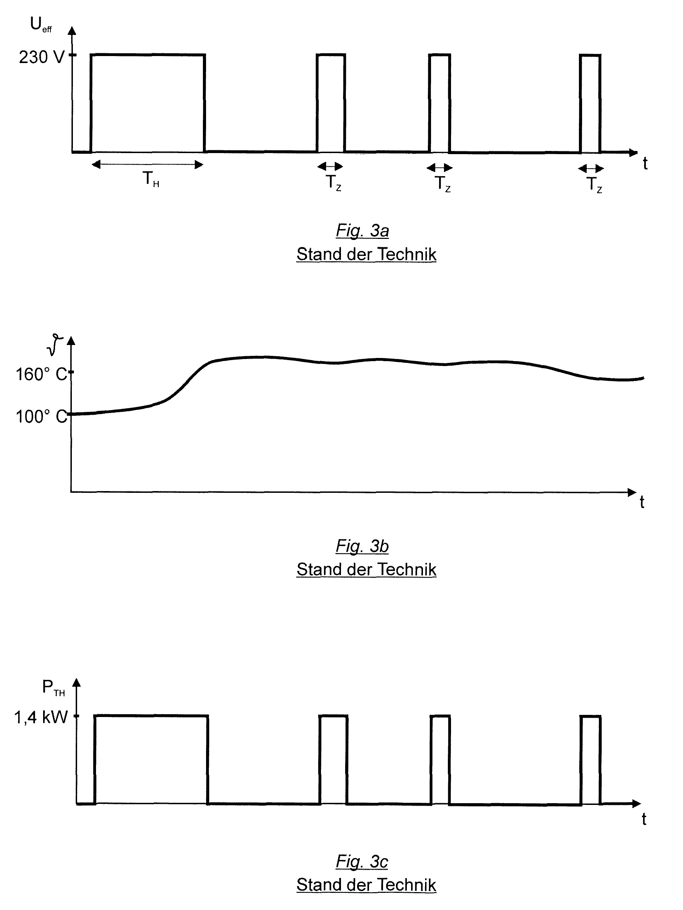

Herkömmliche Kaffeevollautomaten nehmen in der Regel eine Leistung um 1,4 kW auf. Beim erstmaligen Einschalten des Kaffeevollautomaten, d. h. direkt nach der Inbetriebnahme, findet dann durch entsprechende Ansteuerung mittels des Mikrocontrollers 126 ein Aufheizvorgang statt, um das Fluid am Thermoblock auf Nutztemperatur, d. h. ca. 100° C aufzuheizen. Soll dann ein Dampfbezug stattfinden, so muss das zugeführte Fluid von 100° C auf ca. 160° C aufgeheizt werden. Während eines derartigen Aufheizzeitraums T_{H}, der schematisch in den Diagrammen aus den Fig. 3a, 3b und 3c gezeigt ist, steuert der Mikrocontroller 126 den Triac 145 durchgehend derart an, dass er die Wechselspannung von der Wechselspannungsversorgung 160 an den Thermoblock 150 durchschaltet, bis das Feedback-Signal vom Temperatursensor 125 das Erreichen oder Überschreiten der Solltemperatur von beispielsweise 160° C angibt. Während des darauffolgenden Dampfbezuges wird der Thermoblock 150 dann intervallweise ausgeschaltet bzw. zwischenzeitlich in kurzen Zwischenheizzeiträumen Tz von einigen wenigen Sekunden wieder eingeschaltet, um die Solltemperatur für den Nutzdampf von ca. 160° C zu halten.

Die in Fig. 3c gezeigte Heizleistung P_{TH} (durch den weitestgehend ohmschen Verbraucher reine Wirkleistung) folgt dabei der in Fig. 3a dargestellten Effektivspannung U_{eff} am Ausgang des Triacs 145. Es stellt sich dann beispielsweise ein Verlauf der Fluidtemperatur ϑ ein, wie er in Fig. 3b gezeigt ist.

Derartige herkömmliche Heissfluidbereiter weisen nun den Nachteil auf, dass die Zeit für das anfängliche Aufheizen, d. h. der Zeitraum T_{H} relativ lang ist, beispielsweise länger als 5 Sekunden. Soll ein Dampfbezug stattfinden, so muss die volle Zeit T_{H} abgewartet werden, was den Bedienkomfort und die maximale zubereitbare Kaffeemenge pro Zeiteinheit verringert.

Es ist daher die Aufgabe der vorliegenden Erfindung, einen Heissfluidbereiter für einen Kaffeevollautomaten derart weiterzubilden, dass die Aufheizzeit verringert wird. In Bezug auf das erfindungsgemässe Verfahren ist es eine Aufgabe der vorliegenden Erfindung, ein Verfahren zum Betreiben eines Kaffeevollautomaten anzugeben, bei welchem die Wartezeit für einen Kaffeebezug verkürzt ist.

Die Erfindung wird gelöst durch einen Heissfluidbereiter für einen Kaffeevollautomaten mit den Merkmalen des unabhängigen Anspruches 1 sowie durch ein Verfahren zum Betreiben eines Kaffeevollautomaten mit den Merkmalen des unabhängigen Anspruchs 8.

Es ist hierbei vorgesehen, dass der Heissfluidbereiter für einen Kaffeevollautomaten gemäss der vorliegenden Erfindung Folgendes aufweist:
- eine Temperatur-Steuerungsvorrichtung;
- eine Fluid-Heizeinrichtung;
- eine Gleichrichterschaltung; und
- eine Leistungs-Halbleiterschalteinrichtung,
wobei die Gleichrichterschaltung eingangsseitig mit einer Wechselspannungsversorgung und ausgangsseitig unter Zwischenschaltung der Leistung-Halbleiterschalteinrichtung mit der Fluid-Heizeinrichtung verbunden ist, wobei die Leistungs-Halbleiterschalteinrichtung derart ansteuerbar ausgebildet ist, dass sie wahlweise den Ausgang der Gleichrichterschaltung an die Fluid-Heizeinrichtung durchschaltet, und wobei die Temperatur-Steuerungsvorrichtung dazu ausgelegt ist, die Ansteuerung der Leistungs-Halbleiterschalteinrichtung pulsweise vorzunehmen, um so eine Temperatursteuerung vorzunehmen.

Mit anderen Worten, mithilfe der Ansteuerungselektronik, d. h. mithilfe der Temperatur-Steuerungsvorrichtung wird nunmehr kein Triac angesteuert; vielmehr findet eine Gleichrichtung der von der Wechselspannungsversorgung zugeführten Netz-Wechselspannung statt. Die gleichgerichtete Netz-Wechselspannung (Gleichspannung) wird dann mithilfe eines Leistungs-Halbleiterelementes, d. h. mithilfe einer Leistungs-Halbleiterschalteinrichtung nach entsprechender Ansteuerung durch die Temperatur-Steuerungsvorrichtung geschaltet. Die Leistungs-Halbleiterschalteinrichtung ist hierbei ein Halbleiterbauelement, mit welchem auch sehr hohe Leistungen im Gleichstrombereich geschaltet werden können. Durch die entsprechende Ansteuerung kann also die Gleichspannung wahlweise an die Fluidheizeinrichtung angelegt werden. Als besonderer Vorteil ergibt sich, dass erfindungsgemäss nun eine besonders leistungsstarke Fluidheizeinrichtung verwendet werden kann, beispielsweise mit einer Leistungsaufnahme von 2,8 kW. Infolge der Ansteuerung mittels der Temperatur-Steuerungsvorrichtung und der Leistungs-Halbleiterschalteinrichtung, welche sehr schnell stattfinden kann, kommt es auch bei einer hohen Nennleistung der Fluidheizeinrichtung zu einem guten Ansteuerungsverhalten und somit nicht zu einer Überhitzung des Fluids. Dadurch kann die Aufheizzeit zum Aufheizen des Fluids von Brühtemperatur (Wassertemperatur ca. 100° C) auf Nutzdampftemperatur (Dampftemperatur von ca. 160° C) signifikant verkürzt werden, beispielsweise auf nunmehr nur noch 2,5 bis 3 Sekunden.

Gemäss einem Aspekt der Erfindung ist es vorgesehen, dass die Temperatur-Steuerungsvorrichtung dazu ausgelegt ist, das Verhältnis von Pulsdauer zu Pausendauer während der pulsweisen Ansteuerung der Leistungs-Halbleiterschalteinrichtung zu variieren. Hierdurch ergibt sich der besondere Vorteil, dass durch diese Art der Ansteuerung die Fluidheizeinrichtung mit einer beliebigen Leistung zwischen 0 Watt und der Nennleistung, d. h. beispielsweise 2,8 kW betrieben werden kann. Insbesondere dann, wenn nur eine einzige Fluidheizeinrichtung sowohl zum Bereiten von Brühwasser im Bereich von ungefähr 100° C als auch zum Bereiten von Nutzdampf vorgesehen ist, kann dann diese Fluidheizeinrichtung im Normalfall - d. h. zum Bereiten von Brühwasser - mit der bekannten herkömmlichen Nennleistung von ca. 1,4 kW betrieben werden. Soll an dem Kaffeevollautomaten jedoch ein Produkt mit Dampfanteil (Cappuccino, Latte Macchiato usw.) bezogen werden, und das möglichst rasch, so muss nach der entsprechenden Anwahl durch die Bedienperson das Fluid relativ schnell auf eine höhere Temperatur aufgeheizt werden. In diesem Fall kann dann die Leistung der Fluidheizeinrichtung durch die entsprechende Variation der Ansteuerung von Pulsdauer und Pausendauer derart angesteuert werden, dass die Fluidheizeinrichtung mit ihrer vollen Nennleistung von beispielsweise 2,8 kW betrieben wird. Dadurch wird der Aufheizzeitraum stark verkürzt.

Gemäss einem weiteren Aspekt der Erfindung ist es vorgesehen, dass die Fluidheizeinrichtung dazu ausgebildet ist, in Abhängigkeit von der Ansteuerung eingangsseitig zugeführtes Trinkwasser auf eine zum Durchführen eines Kaffeebrühvorganges geeignete Wassertemperatur aufzuheizen oder eingangsseitig zugeführtes Trinkwasser auf Nutzdampftemperatur aufzuheizen und jeweils ausgangsseitig bereitzustellen.

Hierdurch ergibt sich der besondere Vorteil, dass ein und dieselbe Fluidheizeinrichtung durch ihre variable Ansteuerungsmöglichkeit sowohl zum Bereiten von Brühwasser, als auch zum Bereiten von Nutzdampf eingesetzt werden kann. Eine entsprechende Ansteuerung kann in Antwort auf ein Bedienperson eingegebenes Signal, beispielsweise einen Auswahl-Tastendruck oder dergleichen vorgenommen werden.

Gemäss einem weiteren Aspekt der Erfindung kann die FluidHeizeinrichtung dazu ausgebildet sein, das Verhältnis von Pulsdauer zu Pausendauer beim Aufheizen des zugeführten Trinkwassers zu variieren, um eine Veränderung der Heizleistung der Fluid-Heizeinrichtung zu veranlassen. Auf diese Weise ist es vorteilhafterweise möglich, während des Aufheizens des Trinkwassers (z.B. während eines Brühvorganges zum Brühen von Kaffee) die Heizleistung Fluid-Heizeinrichtung im Wesentlichen stufenlos zu variieren (jeweils in Abhängigkeit von dem Verhältnis von Pulsdauer zu Pausendauer), wobei die momentane Heizleistung umso grösser ist, je kleiner die Pausendauer im Vergleich zur Pulsdauer ist.

Gemäss einem weiteren Aspekt der Erfindung ist es vorgesehen, dass die Fluidheizeinrichtung einen Thermoblock mit einer Nennleistung ≥ 2 kW vorzugsweise von ungefähr 2,8 kW ist. Ein Thermoblock mit einer derart hohen Nennleistung ermöglicht es besonders gut, den Aufheizzeitraum insbesondere von einer Brühwassertemperatur (ca. 100° C) auf eine Nutzdampftemperatur (ca. 160° C) entscheidend zu verkürzen; auch für einen anfänglichen Aufheizvorgang ist dies jedoch von Vorteil, wenn beispielsweise direkt nach dem Einschalten möglichst schnell die gewünschte Brühwassertemperatur erreicht werden soll.

Gemäss einem weiteren Aspekt der Erfindung ist es vorgesehen, dass die Temperatur-Steuerungsvorrichtung dazu ausgebildet ist, das Verhältnis von Pulsdauer zu Pausendauer dann derart einzustellen, dass die Fluid-Heizeinrichtung in einem mittleren Leistungsbereich, vorzugsweise ca. 1,4 kW, betrieben wird, wenn die Soll-Fluidtemperatur etwa 100° C beträgt, und dass die Temperatur-Steuerungsvorrichtung dazu ausgelegt ist, das Verhältnis von Pulsdauer zu Pausendauer dann derart einzustellen, dass die Fluid-Heizeinrichtung in ihrem Nenn-Leistungsbereich, vorzugsweise ca. 2,8 kW betrieben wird, wenn die Soll-Fluidtemperatur im Dampfbereich, vorzugweise im Bereich von ca. 160° C liegt.

Die Temperatur im Dampfbereich bezieht sich hierbei auf den Nenndruck des Kaffeevollautomaten bzw. auf den Normdruck (Umgebungsdruck). Durch diese besondere Ausgestaltung ergibt sich der Vorteil, dass bei einer beispielsweise durch die Maschinensteuerung vorgegebene Soll-Fluidtemperatur zum Bereiten eines Heissgetränkes (ca. 100° C Brühwassertemperatur) die Fluidheizeinrichtung in einem mittleren Leistungsbereich betrieben werden kann, was zu einem weniger starken Überschwingverhalten der tatsächlichen Fluidtemperatur am Ausgang der Fluid-Heizeinrichtung führt, als wenn die Fluid-Heizeinrichtung auch zum Beziehen von Brühwasser mit ihrer vollen Nennleistung von beispielsweise 2,8 kW betrieben wird. Soll dann jedoch ein Dampfbezugsvorgang stattfinden, beispielsweise um ein Heissgetränkeprodukt mit Dampfanteil zuzubereiten, so wird in diesem Fall (Soll-Fluidtemperatur im Dampfbereich von ca. 160° C) die Fluid-Heizeinrichtung in ihrem Nenn-Leistungsbereich betrieben, um den Aufheizzeitraum zu verkürzen.

Gemäss einem weiteren Aspekt der Erfindung ist vorgesehen, dass der Heissfluidbereiter ferner einen Temperatursensor zum Erfassen der Fluidtemperatur in der Fluid-Heizeinrichtung oder an deren Ausgang aufweist. Hierbei ist die Temperatur-Steuerungsvorrichtung dazu ausgelegt, das Verhältnis von Pulsdauer zu Pausendauer derart zu variieren, dass eine vorab festgelegte oder festlegbare Soll-Fluidtemperatur am Ausgang der Fluid-Heizeinrichtung erzielt wird.

Hierdurch ist ein besonders genaues Einregeln der gewünschten Temperatur möglich, was es seinerseits wiederum ermöglicht, die Brühwassertemperatur für einen Kaffee-Brühvorgang optimal einzustellen und im Falle eines gewünschten Dampfbezuges auch die Temperatur für den Dampfanteil (Nutzdampftemperatur) möglichst optimal einzustellen.

Gemäss einem weiteren Aspekt der Erfindung ist die Leistungs-Halbleiterschalteinrichtung als MOSFET, vorzugsweise als Power-MOSFET ausgebildet. Es sei hierbei angemerkt, dass auch andere Bauformen grundsätzlich möglich sind, z.B. IGBTs oder dergleichen. Die Ausbildung als Power-MOSFET weist hierbei den besonderen Vorteil auf, dass niedrige Verluste im eingeschwungenen (durchgeschalteten) Zustand auftreten, bei gleichzeitig niedrigen Schaltverlusten (Transientenverlusten).

Bezogen auf das erfindungsgemässe Verfahren wird die Aufgabe dadurch gelöst, dass das Verfahren zum Betreiben eines Kaffeevollautomaten vorgesehen ist, wobei der Kaffeevollautomat zum Bereiten eines heissen Fluids zumindest einen Heissfluidbereiter aufweist, der seinerseits Folgendes aufweist:
- eine Temperatur-Steuerungsvorrichtung;
- eine Fluid-Heizeinrichtung;
- eine Gleichrichterschaltung; und
- eine Leistungs-Halbleiterschalteinrichtung,
wobei die Gleichrichterschaltung eingangsseitig mit einer Wechselspannungsversorgung und ausgangsseitig unter Zwischenschaltung der Leistungs-Halbleiterschalteinrichtung mit der Fluid-Heizeinrichtung verbunden ist, wobei die Leistungs-Halbleiterschalteinrichtung derart ansteuerbar ausgebildet ist, dass sie wahlweise den Ausgang der Gleichrichterschaltung an die Fluid-Heizeinrichtung durchschaltet, und wobei die Temperatur-Steuerungsvorrichtung dazu ausgelegt ist, die Ansteuerung der Leistungs-Halbleiterschalteinrichtung pulsweise vorzunehmen.

Der besondere Vorteil des erfindungsgemässen Verfahrens liegt darin, dass die Fluid-Heizeinrichtung mit verschiedenen Heizleistungen betrieben werden kann, und zwar in Abhängigkeit einer Eingangsvariablen in Form eines Parameters. Dieser Parameter ist derart ablaufbezogen, dass dann, wenn wunschgemäss (beispielsweise nach Vorgabe durch die Maschinensteuerung des Kaffeevollautomaten) der Aufheizzeitraum des Fluids verkürzt werden soll, die Fluidheizeinrichtung mit ihrer vollen Nennleistung betrieben werden kann. Wenn andererseits der Parameter ablaufbezogen angibt, dass nur eine niedrigere Heizleistung vonnöten ist, so kann durch die Variation des Verhältnisses von Pulsdauer zu Pausendauer der Ansteuerung der Leistungs-Halbleiterschalteinrichtung gemäss dem erfindungsgemässen Verfahren auch eine niedrigere Heizleistung angefordert werden, um beispielsweise ein günstigeres Überschwingverhalten der tatsächlichen am Ausgang der Fluid-Heizeinrichtung ausgegebenen Fluidtemperatur zu erreichen.

Gemäss einem Aspekt der Erfindung ist es vorgesehen, dass in dem Verfahren der ablaufbezogene Parameter angibt, ob Heisswasser oder Dampf bezogen werden soll. Alternativ oder zusätzlich gibt der ablaufbezogene Parameter an, auf welcher Temperatur das Heisswasser oder der Dampf bezogen werden soll.

Hierbei ergibt sich der besondere Vorteil, dass parameterabhängig die Leistung (Heizleistung) der Fluidheizeinrichtung gewählt werden kann, so dass dann, wenn besonders schnell Nutzdampf zubereitet werden soll, die Fluid-Heizeinrichtung auf ihrer Nennleistung betrieben wird; wenn jedoch Heisswasser zum Brühen auf einer relativ exakt einzustellenden Brühwassertemperatur bezogen werden soll, so wird durch die entsprechende Angabe des ablaufbezogenen Parameters in dem erfindungsgemässen Verfahren die Fluid-Heizeinrichtung auf einer Heizleistung betrieben, welche niedriger als ihre Nennleistung ist, um somit das Überschwingverhalten der Fluidtemperatur positiv zu beeinflussen und das Fluid möglichst genau auf seiner Solltemperatur zu beziehen.

Gemäss einem weiteren Aspekt der Erfindung weist das Verfahren einen Verfahrensschritt auf, bei welchem das Verhältnis von Pulsdauer zu Pausendauer beim Beziehen von Heisswasser oder Dampf verändert wird. Auf diese Weise kann die Heizleistung der Fluid-Heizeinrichtung jeweils in Abhängigkeit vom Verhältnis von Pulsdauer zu Pausendauer im Wesentlichen stufenlos variiert werden, z.B. während die Fluid-Heizeinrichtung Heisswasser zum Brühen von Kaffee oder Dampf bereitstellt. Dabei ist die momentane Heizleistung der Fluid-Heizeinrichtung umso grösser, je kleiner die Pausendauer im Vergleich zur Pulsdauer ist.

Gemäss einem weiteren Aspekt der Erfindung weist das Verfahren den Verfahrensschritt auf, wonach die Fluidtemperatur, die am Ausgang der Fluidheizeinrichtung bereitgestellt werden soll, ermittelt wird, und wobei der ablaufbezogene Parameter angibt, ob oder ob nicht die Fluidtemperatur eine ablaufbezogene Soll-Fluidtemperatur für die durchzuführende Heissgetränke-Zubereitung um mehr als einen festgelegten oder festlegbaren Wert unterschreitet.

Hierdurch kann erreicht werden, dass nicht nur für das Aufheizen von der Bereitschaftstemperatur (ca. 100° C Brühwassertemperatur) auf die Nutzdampftemperatur (ca. 160° C Dampftemperatur) die Aufheizzeit verkürzt wird; vielmehr kann dann auch nach dem Absenken der Temperatur (z. B. zur Verwirklichung einer Energiesparfunktion zwischen den Kaffeebezügen) der Zeitraum bis zum erneuten Erreichen der Kaffeebereitschaft (Brühwassertemperatur dann wieder auf 100° C) verkürzt werden. Mit anderen Worten: Immer dann, wenn ein besonders schnelles Aufheizen erforderlich ist, weil die Soll-Fluidtemperatur (für Brühwasser bzw. für Dampf) weit oberhalb der tatsächlichen momentanen Fluidtemperatur liegt, durch Ansteuerung mit Nennleistung der Fluid-Heizeinrichtung die Wartezeit erheblich verkürzt werden. Bei einer geringeren Differenz zwischen Soll-Fluidtemperatur und der tatsächlichen Fluidtemperatur wird das Verhältnis von Pulsdauer zu Pausendauer dann derart variiert, dass zwar immer noch ein relativ schnelles Aufheizen stattfindet; durch einen Betrieb der FluidHeizeinrichtung auf einer Leistung geringer als die Nennleistung kann dann jedoch ein besseres Überschwingverhalten sichergestellt werden, so dass z. B. die Brühtemperatur von 100° C (optimale Brühtemperatur) auch bei Initiierung des Brühvorganges nicht unnötig überschritten wird.

Gemäss einem weiteren Aspekt der Erfindung ist es vorgesehen, dass die Temperatur-Steuerungsvorrichtung die Fluid-Heizeinrichtung während eines Bereitschaftszeitraums des Kaffeevollautomaten derart ansteuert, dass ihre Heizleistung durchgehend Null beträgt. Mit anderen Worten: Während des Bereitschaftszeitraums zwischen zwei aufeinanderfolgenden Kaffeebezügen erfolgt kein Heizvorgang mittels der Fluid-Heizeinrichtung. Dies ist bei der erfindungsgemässen Lösung nicht nötig, da zu Beginn eines darauffolgenden Kaffeebezuges das Erreichen der notwendigen Fluidtemperatur durch die entsprechende Ansteuerung sehr schnell vonstattengeht und somit nur eine minimale bis gar keine Wartezeit auftritt. Hierdurch ist eine erhebliche Energieersparnis während längerer Pausenzeiten zwischen den Produktbezügen möglich, da die Heizung ganz ausgeschaltet werden kann. Die Temperatur am Ausgang der FluidHeizeinrichtung muss also nicht mehr ständig auf einer Bereitschaftstemperatur gehalten werden, was sich insbesondere dann positiv auf die Energiebilanz auswirkt, wenn über einen längeren Zeitraum, währenddessen das Fluid abkühlen kann, kein Produktbezug stattfindet.

Gemäss einem weiteren Aspekt der erfindungsgemässen Lösung wird ein oben genannter Heissfluidbereiter in einem Kaffeevollautomaten verwendet. Hierbei weist der Kaffeevollautomat eine Ablaufsteuerungseinrichtung zum Steuern eines automatischen oder halbautomatischen Heissgetränk-Zubereitungsvorganges auf. Die Ablauf-Steuerungseinrichtung nimmt hierbei die Festlegung der Soll-Fluidtemperatur für die Temperatur-Steuerungsvorrichtung in Abhängigkeit vom Zeitablauf des Heissgetränke-Zubereitungsvorganges vor.

Hierdurch ergibt sich der besondere Vorteil, dass unabhängig von einer Bedienperson vollautomatisch während eines Heissgetränke-Zubereitungsvorganges mittels der Ablauf-Steuerungseinrichtung des Kaffeevollautomaten eine Beeinflussung der Heizleistung der Fluid-Heizeinrichtung stattfinden kann. Dies ist insbesondere bei kombinierten Produkten mit Dampfund Brühwasseranteil vorteilhaft, da durch eine derartige automatische Ansteuerung der Wartezeitraum zwischen den einzelnen Aufheizvorgängen nochmals verkürzt werden kann.

Bei der erfindungsgemässen Verwendung kann wiederum vorgesehen sein, dass die Temperatur-Steuerungsvorrichtung die Fluid-Heizeinrichtung während eines Bereitschaftszeitraums des Kaffeevollautomaten derart ansteuert, dass ihre Heizleistung durchgehend Null beträgt.

Hierdurch ergibt sich wiederum der besondere Vorteil, dass in längeren Pausenzeiten zwischen den Produktbezügen nicht mehr geheizt werden muss, so dass auch bei einer Abkühlung des Thermoblockes dieser besonders schnell wieder auf seine SollTemperatur für den jeweils gewählten Produktbezug aufgeheizt werden kann. In der Zwischenzeit kann Energie gespart werden. Die Erfindung wird nun unter Bezugnahme auf die beigefügten Zeichnungen näher erläutert.

Es zeigen:
- Fig. 1:: den schematischen Aufbau eines Kaffeevollautomaten;
- Fig. 2:: ein Blockdiagramm eines aus dem Stand der Technik bekannten Heissfluidbereiters;
- Fig. 3a-3c:: Zeitverlaufsdiagramme der Effektivspannung (Fig. 3a), der Fluidtemperatur (Fig. 3b) sowie der thermischen Leistung (Fig. 3c) an einer Fluid-Heizeinrichtung in einem aus dem Stand der Technik bekannten Heissfluidbereiter gemäss Fig. 2;
- Fig. 4:: in schematischer Vereinfachung, den Verlauf der Wirkleistungskurve über der Zeit bei dem aus dem Stand der Technik bekannten Heissfluidbereiter gemäss Fig. 3c;
- Fig. 5:: ein schematisches Blockdiagramm eines erfindungsgemässen Heissfluidbereiters gemäss einer Ausführungsform der vorliegenden Erfindung;
- Fig. 6a-6c:: Zeitverlaufsdiagramme des Effektivwerts der Spannung (Fig. 6a), der Fluidtemperatur (Fig. 6b) sowie der Wirkleistung (Fig. 6c) des erfindungsgemässen Heissfluidbereiters aus Fig. 5; und
- Fig. 7:: schematisch den Verlauf der Heizleistung als Funktion der Zeit gemäss Fig. 6c in Gegenüberstellung zu dem Heizleistungsverlauf als Funktion der Zeit gemäss Fig. 4.

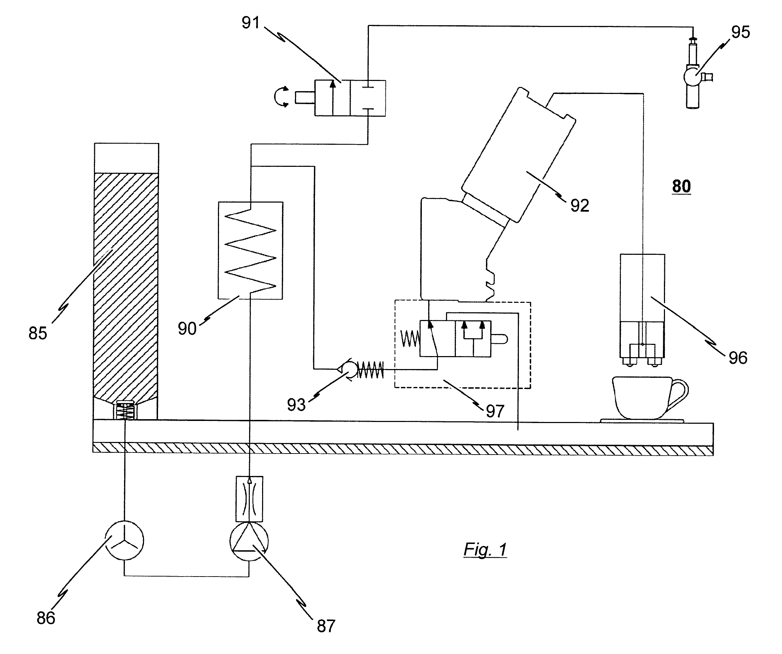

Fig. 1 zeigt schematisch den Aufbau eines Kaffeevollautomaten 80. Ein Wassertank 85 dient der Frischwasserzufuhr zu einem Durchlauferhitzer 90, wobei zur Messung der durchflossenen Wassermenge ein Durchflussmesser 86 sowie zum Fördern des Frischwassers eine Pumpe 87 zwischengeschaltet sind. Der Durchlauferhitzer 90 dient vorliegend als Heissfluidbereiter mit entsprechender Ansteuerungsmöglichkeit und ist mit einer (nicht dargestellten) Maschinen-Ablaufsteuerung des Kaffeevollautomaten verbunden. Ausgangsseitig ist an dem Durchlauferhitzer 90 ein Umschaltventil 91 vorgesehen, welches das Umschalten der Zufuhr der Ausgabe des Durchlauferhitzers 90 zu einer Aufschäumeinrichtung 95 (mit Dampf betrieben) bzw. zu einer Brüheinheit 92 (mit heissem Brühwasser betrieben) ermöglicht. Eingangsseitig ist die Brüheinheit 92 mit einem Rückschlagventil 93 sowie einem Drainage-Ventil 97 versehen. Ausgangsseitig wird das in der Brüheinheit 92 zubereitete Kaffeegetränk einer Kaffee-Ausgabeeinrichtung 96 zugeführt, welche das zubereitete Kaffeegetränk ausgibt, beispielsweise in ein Trinkgefäss (Tasse), wie in Fig. 1 dargestellt.

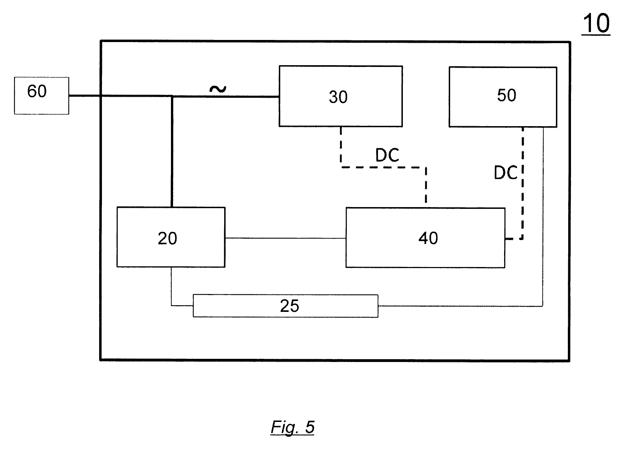

Bei dem in Fig. 5 dargestellten Blockschaltbild weist der in dem Durchlauferhitzer 90 des Kaffeevollautomaten 80 angeordnete Heissfluidbereiter 10 gemäss der Ausführungsform der Erfindung eine Wechselspannungsversorgung 60 auf, welche in der Regel einem Netzspannungsanschluss (230 V, 50 Hz) entspricht. Diese (von der Wechselspannungsversorgung 60 bereitgestellte) Netz-Wechselspannung wird nun einer Temperatur-Steuerungsvorrichtung 20 zugeführt; gleichzeitig wird sie einer Gleichrichterschaltung 30 zugeführt, welche ausgangsseitig eine gleichgerichtete Netzspannung auf ihrem Effektivwert (ca. 325 V DC) an eine Leistungs-Halbleiterschalteinrichtung 40 in Form eines Power-MOSFET ausgibt. Die Leistungs-Halbleiterschalteinrichtung 40 wird über eine Schnittstellenverbindung von der Temperatur-Steuerungsvorrichtung 20 angesteuert. Ausgangsseitig ist die Leistungs-Halbleiterschalteinrichtung 40 mit einer Fluid-Heizeinrichtung 50 in Form eines Thermoblocks verbunden, welcher die eigentliche Durchlauferhitzungsfunktion des Durchlauferhitzers 90 bereitstellt.

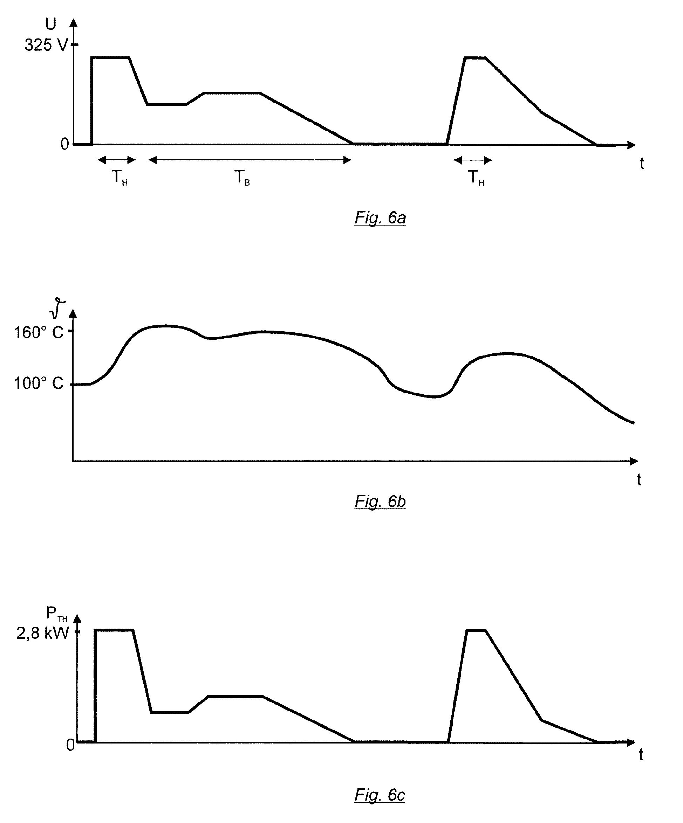

In Fig. 6a ist der Verlauf der Gleichspannung bei einer erfindungsgemässen Ansteuerung der Leistungs-Halbleiterschalteinrichtung 40 mittels der Temperatur-Steuerungsvorrichtung 20 gezeigt. Wie aus Fig. 5 ersichtlich, dient ein mit der Fluid-Heizeinrichtung 50 verbundener Temperatursensor 25, der die Fluid-Temperatur ϑ in der Fluid-Heizeinrichtung 50 bzw. an ihrem Ausgang misst, zur Rückführung einer Messgrösse (hier: der Temperatur) an die Temperatur-Steuerungsvorrichtung 20. Während eines Aufheizzeitraums T_{H} wird nun, wie aus Fig. 6a ersichtlich, die am Eingang der Fluid-Heizeinrichtung 50 mittels der Leistungs-Halbleiterschalteinrichtung 40 angelegte Gleichspannung zunächst voll durchgeschaltet, so dass - wie in Fig. 6b dargestellt - die Fluidtemperatur ϑ für einen Dampfbezug von ihrer Brühwasser von ca. 100° C relativ schnell (< 5 Sekunden) auf die Nutzdampftemperatur von 160° C ansteigt. Der zugehörige Verlauf der Heizleistung P_{Th} ist in Fig. 6c dargestellt. Wie zu erkennen ist, befindet sich während des Aufheizzeitraums T_{H} die Heizleistung P_{Th} auf ihrem Maximum von 2,8 kW.

Nach Abschluss des Aufheizzeitraums wird die Spannung und somit die Heizleistung gedrosselt; der Einfachheit halber ist in Fig. 6a nicht die tatsächlich anliegende gepulste Gleichspannung gezeigt, sondern vielmehr der Spannungsverlauf der effektiven Gleichspannung an einem trägen Verbraucher. Gleichwohl wird aber deutlich, dass nach erfolgtem Kaffeebezug die Spannung und damit die thermische Leistung für einen kurzen Bereitschaftszeitraum T_{B} auf einem mittlerem Wert gehalten wird, um dann gegen Ende des Bereitschaftszeitraumes T_{B} auf Null abgesenkt zu werden, um Energie zu sparen. In diesem Zeitraum sinkt dann auch die Fluidtemperatur ϑ und fällt auf einen Wert unterhalb der Brühwassertemperatur von 100° C. Zu Beginn eines erneuten Kaffeebezugs wird in einem nachfolgenden Aufheizzeitraum T_{H} die Spannung wiederum auf ihren vollen Wert von ca. 325 V gebracht, wodurch die Wirkleistung für diesen Zeitraum wiederum der Nennleistung von 2,8 kW entspricht. Während dieses Zeitraums steigt die Fluidtemperatur ϑ wiederum relativ schnell an, wodurch der Aufheizzeitraum T_{H} verkürzt und damit die Wartezeit verringert werden kann.

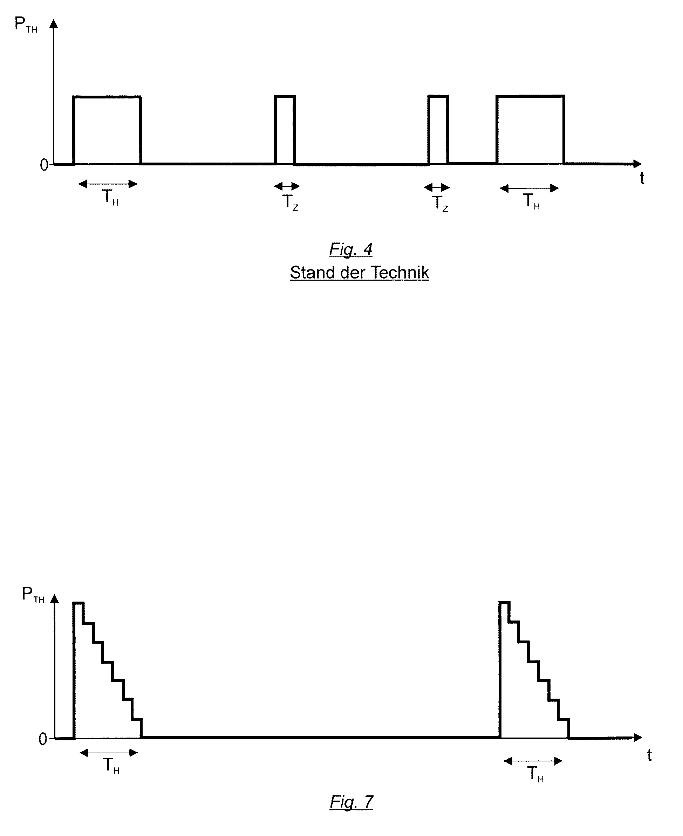

Wie aus der schematischen Gegenüberstellung der jeweiligen Zeitverläufe der Wirkleistungen ersichtlich (die herkömmliche Lösung gemäss dem Stand der Technik ist in Fig. 4 dargestellt; die erfindungsgemässe Lösung ist in Fig. 7 dargestellt), ist es erfindungsgemäss nicht mehr nötig, während eines Bereitschaftszeitraumes T_{B} Zwischenheizzeiträume Tz einzufügen, um die Fluidtemperatur ϑ ständig auf der Brühwassertemperatur von ca. 100° C zu halten.

Wie aus Fig. 7 ersichtlich, sind vielmehr zu Beginn eines jeden Brühvorganges jeweils Aufheizvorgänge (Aufheizzeiträume T_{H}) mit einer im Vergleich zur herkömmlichen Lösung hohen Leistung der Fluid-Heizeinrichtung 50 vorgesehen. Dadurch ist es möglich, den Aufheizzeitraum T_{H} und somit die Wartezeit zu Beginn eines Brühvorganges oder für einen Dampfbezug erheblich zu verringern.

Es sei an dieser Stelle angemerkt, dass die Erfindung nicht auf die dargestellte Ausführungsform beschränkt ist. Abwandlungen und mögliche Weiterbildungen sind dem Fachmann geläufig.

## Patentansprüche

1. Heissfluidbereiter (10) für einen Kaffeevollautomaten, der Folgendes aufweist:
• eine Temperatur-Steuerungsvorrichtung (20);
• eine Fluid-Heizeinrichtung (50);
• eine Gleichrichterschaltung (30); und
• eine Leistungs-Halbleiterschalteinrichtung (40),
wobei die Gleichrichterschaltung (30) eingangsseitig mit einer Wechselspannungsversorgung (60) und ausgangsseitig unter Zwischenschaltung der Leistungs-Halbleiterschalteinrichtung (40) mit der Fluid-Heizeinrichtung (50) verbunden ist, wobei die Leistungs-Halbleiterschalteinrichtung (40) derart ansteuerbar ausgebildet ist, dass sie wahlweise den Ausgang der Gleichrichterschaltung (30) an die Fluid-Heizeinrichtung (50) durchschaltet, und wobei die Temperatur-Steuerungsvorrichtung (20) dazu ausgelegt ist, die Ansteuerung der Leistungs-Halbleiterschalteinrichtung (40) pulsweise vorzunehmen, um so eine Temperatursteuerung vorzunehmen.

2. Heissfluidbereiter (10) nach Anspruch 1, wobei die Temperatur-Steuerungsvorrichtung (20) dazu ausgelegt ist, das Verhältnis von Pulsdauer zu Pausendauer während der pulsweisen Ansteuerung der Leistungs-Halbleiterschalteinrichtung (40) zu variieren.

3. Heissfluidbereiter (10) nach einem der Ansprüche 1 bis 2, wobei die Fluid-Heizeinrichtung (50) dazu ausgebildet ist, in Abhängigkeit von der Ansteuerung eingangsseitig zugeführtes Trinkwasser auf eine zum Durchführen eines Kaffee-Brühvorgangs geeignete Wassertemperatur aufzuheizen oder eingangsseitig zugeführtes Trinkwasser auf Nutzdampftemperatur aufzuheizen und jeweils ausgangsseitig bereitzustellen.

4. Heissfluidbereiter (10) (10) nach der Anspruch 3, wobei die Fluid-Heizeinrichtung (50) dazu ausgebildet ist, das Verhältnis von Pulsdauer zu Pausendauer beim Aufheizen des zugeführten Trinkwassers zu variieren, um die Heizleistung der Fluid-Heizeinrichtung (50) im Wesentlichen stufenlos zu regeln.

5. Heissfluidbereiter (10) nach einem der Ansprüche 1 bis 4, wobei die Fluid-Heizeinrichtung (50) ein Thermoblock mit einer Nennleistung ≥ 2 kW, vorzugsweise von ungefähr 2,8 kW ist.

6. Heissfluidbereiter (10) nach einem der Ansprüche 1 bis 5, wobei die Temperatur-Steuerungsvorrichtung (20) dazu ausgelegt ist, dass Verhältnis von Pulsdauer zu Pausendauer dann derart einzustellen, dass die Fluid-Heizeinrichtung (50) in einem mittleren Leistungsbereich, vorzugsweise ca. 1,4 kW betrieben wird, wenn die Soll-Fluidtemperatur etwa 100° C beträgt, und dass die Temperatur-Steuerungsvorrichtung (20) dazu ausgelegt ist, das Verhältnis von Pulsdauer zu Pausendauer dann derart einzustellen, dass die Fluid-Heizeinrichtung (50) in ihrem Nenn-Leistungsbereich, vorzugsweise ca. 2,8 kW, betrieben wird, wenn die Soll-Fluidtemperatur im Dampfbereich, vorzugsweise im Bereich von ca. 160° C liegt.

7. Heissfluidbereiter (10) nach einem der Ansprüche 1 bis 6, wobei der Heissfluidbereiter (10) ferner einen Temperatursensor (25) zum Erfassen der Fluidtemperatur (ϑ) in der Fluid-Heizeinrichtung oder an deren Ausgang aufweist, und wobei die Temperatur-Steuerungsvorrichtung (20) dazu ausgelegt ist, das Verhältnis von Pulsdauer zu Pausendauer derart zu variieren, dass eine vorab festgelegte oder festlegbare Soll-Fluidtemperatur am Ausgang der Fluid-Heizeinrichtung erzielt wird.

8. Heissfluidbereiter (10) nach einem der Ansprüche 1 bis 7, wobei die Leistungs-Halbleiterschalteinrichtung (40) als MOSFET, vorzugsweise als Power-MOSFET ausgebildet ist.

9. Verfahren zum Betreiben eines Kaffeevollautomaten (80), wobei der Kaffeevollautomat (80) zum Bereiten eines heissen Fluides zumindest einen Heissfluidbereiter (10) aufweist, der seinerseits folgendes aufweist:
• eine Temperatur-Steuerungsvorrichtung (20);
• eine Fluid-Heizeinrichtung (50);
• eine Gleichrichterschaltung (30); und
• eine Leistungs-Halbleiterschalteinrichtung (40),
wobei die Gleichrichterschaltung (30) eingangsseitig mit einer Wechselspannungsversorgung (60) und ausgangsseitig unter Zwischenschaltung der Leistungs-Halbleiterschalteinrichtung (40) mit der Fluid-Heizeinrichtung (50) verbunden ist, wobei die Leistungs-Halbleiterschalteinrichtung (40) derart ansteuerbar ausgebildet ist, dass sie wahlweise den Ausgang der Gleichrichterschaltung (30) an die Fluid-Heizeinrichtung (50) durchschaltet, und wobei die Temperatur-Steuerungsvorrichtung (20) dazu ausgelegt ist, die Ansteuerung der Leistungs-Halbleiterschalteinrichtung (40) pulsweise vorzunehmen, wobei das Verfahren die folgenden Verfahrensschritte aufweist:
• Ermitteln eines ablaufbezogenen Parameters für eine durchzuführende Heissgetränke-Zubereitung;
• Variieren des Verhältnisses von Pulsdauer zu Pausendauer der Ansteuerung der Leistungs-Halbleiterschalteinrichtung (40) in Abhängigkeit von dem ablaufbezogenen Parameter, um eine zugehörige Heizleistung (P_{TH}) der Fluid-Heizeinrichtung einzustellen.

10. Verfahren nach Anspruch 9, wobei der ablaufbezogene Parameter angibt, ob Heisswasser oder Dampf bezogen werden soll und/oder wobei der ablaufbezogene Parameter angibt, auf welcher Temperatur (ϑ) das Heisswasser oder der Dampf bezogen werden soll.

11. Verfahren nach Anspruch 10, wobei das Verhältnis von Pulsdauer zu Pausendauer beim Beziehen von Heisswasser oder Dampf verändert wird, um die Heizleistung der FluidHeizeinrichtung (50) im Wesentlichen stufenlos zu variieren.

12. Verfahren nach Anspruch 9, wobei das Verfahren ferner den folgenden Verfahrensschritt aufweist:
• Ermitteln der Fluidtemperatur (ϑ), die am Ausgang der Fluid-Heizeinrichtung (50) bereitgestellt werden soll,
und wobei der ablaufbezogene Parameter angibt, ob oder ob nicht die Fluidtemperatur (ϑ) eine ablaufbezogene Soll-Fluidtemperatur für die durchzuführende Heissgetränke-Zubereitung um mehr als einen festgelegten oder festlegbaren Wert unterschreitet.

13. Verfahren nach einem der Ansprüche 9 bis 12, wobei die Temperatur-Steuerungsvorrichtung (20) die Fluid-Heizeinrichtung (50) während eines Bereitschaftszeitraums (T_{B}) des Kaffeevollautomaten (80) derart ansteuert, dass ihre Heizleistung durchgehend Null beträgt.

14. Verwendung des Heissfluidbereiters nach einem der Ansprüche 1 bis 7 in einem Kaffeevollautomaten (80), wobei der Kaffeevollautomat (80) eine Ablauf-Steuerungseinrichtung zum Steuern eines automatischen oder halbautomatischen Heissgetränk-Zubereitungsvorganges aufweist, und wobei die Ablauf-Steuerungseinrichtung die Festlegung der Soll-Fluid-Temperatur für die Temperatur-Steuerungsvorrichtung (20) in Abhängigkeit vom Zeitablauf des Heissgetränk-Zubereitungsvorganges vornimmt.

15. Verwendung nach Anspruch 14, wobei die Temperatur-Steuerungsvorrichtung (20) die Fluid-Heizeinrichtung (50) während eines Bereitschaftszeitraums (T_{B}) des Kaffeevollautomaten (80) derart ansteuert, dass ihre Heizleistung durchgehend Null beträgt.
